# EUROPÄISCHE PATENTSCHRIFT

(11) **EP 2 208 621 B1**
(45) Veröffentlichungstag und Bekanntmachung des Hinweises auf die Patenterteilung: **03.04.2013**
(21) Anmeldenummer: 10000244.3
(22) Anmeldetag: 13.01.2010
(51) Int. Cl.: B60B 1/00, B60B 21/02

(54) **Rad**
Wheel
Roue

(30) Priorität: 19.01.2009 DE 102009005427
(43) Veröffentlichungstag der Anmeldung: 21.07.2010
(73) Patentinhaber: BBS GmbH, 77761 Schiltach (DE)
(72) Erfinder: Frick, Ewald, 72275 Alpirsbach (DE); Wurft, Jörg, 77761 Schiltach (DE)
(74) Vertreter: Patentanwälte Westphal, Mussgnug & Partner

(56) Entgegenhaltungen:
- EP-A2- 1 016 552
- EP-A2- 1 920 948
- CH-A- 542 730
- DE-A1- 3 437 855
- DE-A1- 19 522 270

## Beschreibung

Die Erfindung betrifft ein Rad, insbesondere ein Leichtmetallrad für Kraftfahrzeuge, gemäß Oberbegriff des Anspruchs 1, wie in EP 1 920 948 A2 angegeben. Außerdem sind ähnliche Räder aus CH 542 730 A, DE 34 37 855 A1 oder EP 1 016 552 A2 bekannt.

Derartige Räder sind speziell an höherwertigen Kraftfahrzeugen werksseitig montiert oder aber im Fachhandel als Nachrüst-Räder zur Aufwertung anzutreffen.

In an sich bekannter Weise sind solche Räder aus einer Radfelge und einem Radstern aufgebaut. Die Radfelge besitzt ein Felgeninnenbett und ein Felgenaußenbett, die jeweils in ein Felgeninnenhorn und ein Felgenaußenhorn übergehen. Dieser Bereich dient der Aufnahme des Reifens.

Der Radstern ist maßgeblich für das optische Erscheinungsbild des Rads verantwortlich. Besonderer Popularität erfreuen sich solche Räder, bei denen der Radstern eine Vielzahl von Speichen aufweist, welche durch Speichenstege gebildet werden, die sich ausgehend von einem Nabenbereich in im Wesentlichen radialer Richtung erstrecken und endseitig direkt oder indirekt an der Radfelge angebunden sind. Die Speichenstege können hierbei exakt radial verlaufend angeordnet sein. Abweichungen vom exakt radialen Verlauf ergeben sich dann, wenn bspw. Doppelspeichenanordnungen gewählt werden. Beliebt sind auch Speichen, die jeweils durch zwei Speichenstege gebildet sind, die V-förmig zueinander angeordnet und im Nabenbereich zu einem gemeinsamen Stegabschnitt zusammenlaufen. Derartige Speichen werden als Y-Speichen bezeichnet.

In jüngerer Zeit haben sich auch Speichenformen etabliert, die einen gekrümmten Verlauf aufweisen, etwa nach Art von Turbinenschaufeln. Auch ein derartiger Speichenverlauf soll unter dem Begriff des im Wesentlichen radialen Verlaufs erfasst sein.

Entscheidend im hier vorliegenden Fall ist das Vorhandensein von axial durchgehenden Speichenzwischenräumen, die sich jeweils zwischen zwei benachbarten Speichenstegen einstellen. Diese Speichenzwischenräume ergeben den angestrebten Effekt einer filigranen, offenen Optik, die dem aktuellen Designtrend entspricht.

Derartige Räder leisten auch einen nicht unerheblichen Beitrag zur Reduzierung des Kraftstoffverbrauchs des Kraftfahrzeuges in Folge ihres im Vergleich zu Stahlrädern verringerten Gewichts. Trotz verbesserter Fertigungsverfahren sowie der Verfügbarkeit hochfester aluminium- oder magnesiumhaltiger Legierungen sind der weiteren Gewichtsreduzierung enge Grenzen gesetzt, zumal diese nur über einen hohen finanziellen Aufwand erreichbar und somit für Fahrzeuge im mittleren und unteren Preissegment nicht darstellbar ist.

Der vorliegenden Erfindung lag deshalb das Problem zugrunde, ein Rad der eingangs genannten Art zur Verfügung zu stellen, welches unter weitgehender Beibehaltung der aktuellen filigranen, offenen Optik eine weitere Verbesserung im Hinblick auf den Kraftstoffverbrauch und damit einhergehend eine Reduzierung des CO₂-Ausstoß des Kraftfahrzeugs mit relativ geringem zusätzlichen Kostenaufwand ermöglicht.

Gelöst wird dieses Problem durch ein gattungsgemäßes Rad mit den Merkmalen des kennzeichnenden Teils des Anspruchs 1.

Bevorzugte Ausführungsformen der Erfindung sind durch die Merkmale der Unteransprüche angegeben.

Die Erfindung basiert auf der Erkenntnis, dass sich bei bewegtem Fahrzeug eine axial auswärts gerichtete Strömung durch die Speichenzwischenräume hindurch einstellt, die die Außenumströmung der Karosserie des Kraftfahrzeuges negativ beeinflusst. Durch die erfindungsgemäß vorgesehenen scheibenförmigen Anströmelemente, die zumindest teilweise die Speichenzwischenräume abdecken, durchsetzen oder in axialer Richtung überdecken, lässt sich die Durchströmung der Speichenzwischenräume reduzieren bzw. im Extremfall eliminieren. Windkanalversuche haben ergeben, dass sich hierdurch der Widerstandsbeiwert eines modernen Kraftfahrzeuges um bis zu 5% reduzieren lässt.

Bereits relativ kleinflächige Anströmelemente reichen aus, um die angesprochene Reduzierung des Luftwiderstandsbeiwertes zu erreichen. Dies gilt speziell dann, wenn die Anströmelemente radial außenliegend in Bezug auf die Speichenzwischenräume angeordnet sind. Dies ermöglicht die weitgehend ungestörte Beibehaltung des offenen Raddesigns, speziell dann, wenn die Anströmelemente axial gegenüber der äußeren Sichtfläche des Radsterns zurückversetzt angeordnet sind.

Die scheibenförmigen Anströmelemente können als Ringscheiben ausgebildet sein, die in geeigneter Weise an der Radfelge und/oder dem Radstern befestigt werden. Diese Ausführungsvariante ist kostengünstig zu realisieren und kann auch als Nachrüstlösung für vorhandene Räder herangezogen werden. Bei einer Anbringung außen auf der Sichtseite kann darüber hinaus ein Anfahrschutz für das beschädigungsgefährdete Felgenaußenhorn dadurch erreicht werden, dass die Ringscheibe radial nach außen mit einem Ansatz versehen ist, der das Felgenaußenhorn zumindest teilweise überdeckt. Sofern die Ringscheibe lösbar, bspw. mittels Befestigungsschrauben, gehalten ist, kann diese im Falle einer Beschädigung durch Bordsteinkontakt leicht ausgewechselt werden.

Alternativ kann das Anströmelement als Ringsteg ausgebildet sein, der an dem Rad angeformt ist. Der Ringsteg wird in diesem Fall während des Formgebungsprozesses für das Rad mitangeformt und ist damit integraler Bestandteil des Rades.

Je weiter das Anströmelement in axialer Richtung von der Sichtseite des Rades einwärts versetzt angeordnet ist, umso weniger tritt es optisch in Erscheinung.
Schließlich kann das Anströmelement auch Teil eines im Bereich des Felgenaußenhorns und/oder des Felgeninnenhorns angeordneten Profils einer dort angeordneten Hohlkammer sein.

Die Erfindung wird nachstehend näher anhand der in den Figuren dargestellten Ausführungsbeispiele erläutert. Hierbei werden verschiedene Umsetzungsmöglichkeiten des erfindungsgemäßen scheibenförmigen Anströmelementes anhand eines im Übrigen weitgehend übereinstimmenden Rades im klassischen Speichendesign mit Y-förmig verlaufenden Speichenstegen erläutert. Hierbei wird jeweils das Rad in perspektivischer Ansicht im Halbschnitt dargestellt.

Es zeigen:
- Fig. 1: Rad mit axial außen angebrachter Ringscheibe,
- Fig. 2: Rad mit axial innenliegend angebrachter Ringscheibe,
- Fig. 3: Ausführung gemäß Fig. 2, Ansicht von hinten,
- Fig, 4: Rad mit innenliegender Ringscheibe, Befestigung im Nabenbereich,
- Fig. 5: Ausführungsvariante gemäß Fig. 4, Ansicht von hinten,
- Fig. 6: Rad mit Ringsteg, außenbündig mit Felgenaußenhorn,
- Fig. 7: Rad mit Ringsteg, außenbündig mit den Speichenstegen,
- Fig. 8: Rad mit Ringsteg, axial zurückversetzt,
- Fig. 9: Rad mit Ringsteg, axial weiter zurückversetzt bis zur axialen Mitte der Speichenstege,
- Fig. 10: Rad mit Ringsteg, axial zurückversetzt bis zur Hinterkante der Speichenstege,
- Fig. 11: Rad mit Ringsteg, ausgehend vom Nabenbereich, axial zurückversetzt,
- Fig. 12: Rad mit Ringsteg, ausgehend vom Nabenbereich, axial zurückversetzt, mit vergrößertem Durchmesser,
- Fig. 13: Rad mit Ringsteg analog Fig. 11, jedoch axial weiter zurückversetzt,
- Fig. 14: Rad mit Ringsteg, ausgehend vom Nabenbereich, in der Nähe der Hinterkante der Speichenstege, kleiner Durchmesser,
- Fig. 15: Rad mit Ringsteg analog Fig. 14, mittlerer Durchmes- ser,

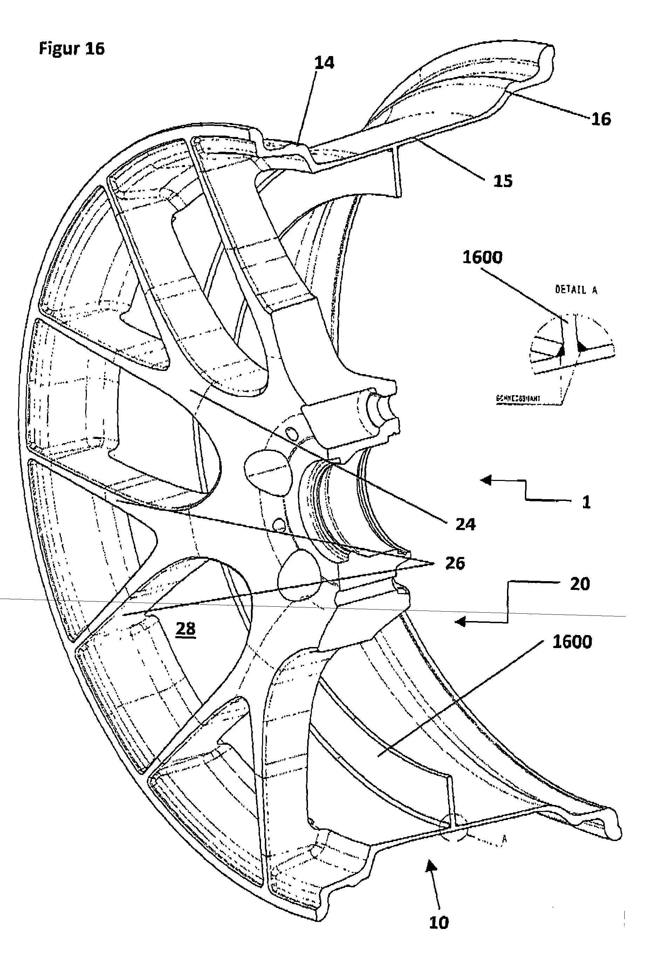

- Fig. 16: Rad mit Ringscheibe im mittleren Bereich zwischen Felgenaußenbett und Felgeninnenbett,

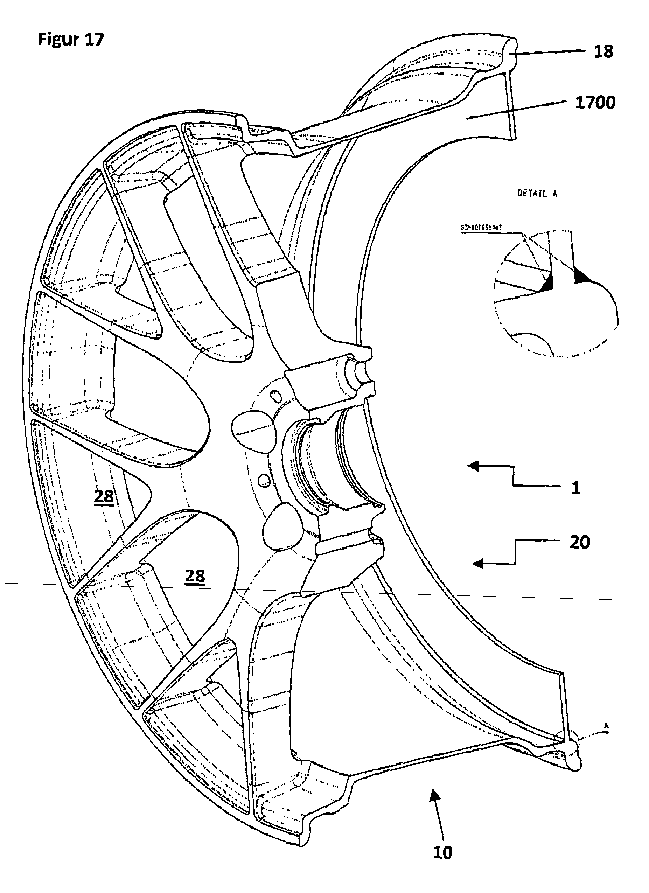

- Fig. 17: Rad mit Ringscheibe im Bereich des Felgeninnenhorns,
- Fig. 18: Rad mit Ringsteg als Teil eines Hohlkammerprofils,
- Fig. 19: Rad analog zu Fig. 18, mit zusätzlicher Hohlkammer im Bereich des Felgeninnenhorns.

In sämtlichen Figuren ist ein Rad 1 in Form eines Leichtmetallrades für ein Kraftfahrzeug dargestellt, das im Wesentlichen aus einer Radfelge 10 und einem Radstern 20 aufgebaut ist. Im hier dargestellten Fall handelt es sich um ein sog. einteiliges Rad, bei dem Radfelge 10 und Radstern 20 aus einem einzigen Rohling geformt wurden. Ebenso ist es aber auch möglich, die Erfindung an einem mehrteiligen, insbesondere auch zweiteiligen Rad zu realisieren, bei dem Radfelge und Radstern separat geformt und anschließend miteinander verbunden, bspw. miteinander verschraubt werden.

Die Radfelge 10 ist in an sich bekannter Weise mit einem Felgeninnenbett 16 und einem Felgenaußenbett 14 versehen, die jeweils axial in ein Felgeninnenhorn 18 und ein Felgenaußenhorn 12 übergehen.

Der Radstern 20 weist einen üblichen Nabenbereich 22 auf, von dem eine Vielzahl von Speichen 24, die durch Speichenstege 26 gebildet werden, ausgehen. Die Speichen 24 bzw, die Speichenstege 26 erstrecken sich im Wesentlichen in radialer Richtung und sind endseitig an der Radfelge 10 angebunden. Im hier konkret vorliegenden Fall sind die Speichenstege 26 direkt an der Radfelge 10 angebunden, da das Rad 1 einteilig ausgeführt ist. Im Falle einer mehrteiligen Ausführung könnten die Speichenstege zunächst in einen Ringflansch übergehen, der dann bspw. im Bereich des Felgenaußenbettes mit der Radfelge verbunden ist. In diesem Falle würden sich die Speichenstege indirekt abstützen.

Im hier gewählten Beispiel sind jeweils zwei benachbarte Speichenstege 26 V-förmig verlaufend angeordnet und gehen radial einwärts gerichtet gemeinsam in den Nabenbereich 22 über. Es entsteht somit eine Speiche 24 Y-Form.

In Umfangsrichtung u betrachtet entstehen somit zwischen jeweils zwei benachbarten Speichenstegen 26 abwechselnd V- und U-förmige Speichenzwischenräume, die zu dem eingangs beschriebenen offenen, filigranen Gesamteindruck des Rades 1 maßgeblich beitragen. Es versteht sich von selbst, dass auch andere Speichengestaltungen in gleicher Weise gewählt werden können.

Der vorstehend beschriebene Aufbau des Rades 1 ist in allen dargestellten Ausführungsbeispielen grundsätzlich übereinstimmend, wobei die axiale Position der Speichenstege 26 in Bezug auf das Felgenaußenbett 14 variieren kann. Zur Vermeidung von Wiederholungen wird deshalb lediglich auf die verschiedenen Möglichkeiten der Anbringung des erfindungsgemäßen Anströmelementes abgehoben.

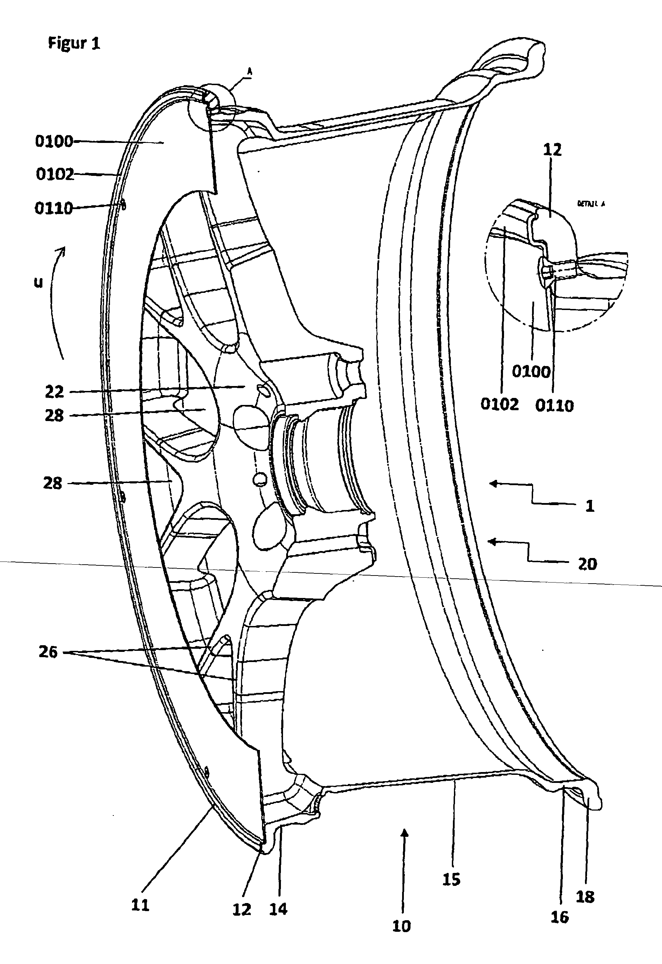

Die Ausführungsvarianten gemäß den Fig. 1 bis Fig. 5 zeigen die Ausgestaltung eines Anströmelementes in Form von Ringscheiben 0100, 0200, 0400, welche als eigenständiges Bauteil zunächst vorgefertigt und danach mit dem Radstern 20 und/oder der Radfelge 10 verbunden werden.

Fig. 1 zeigt eine Ringscheibe 0100, die mittels mehrerer, gleichmäßig über den Umfang verteilter Befestigungsschrauben 0110 im Übergangsbereich vom Felgenaußenhorn 12 zum Felgenaußenbett 14 fixiert ist. Die Ringscheibe 0100 liegt unmittelbar an den Speichenstegen 26 an und deckt auf diese Weise einen radial äußeren Randbereich der Speichenstege 26 auf der Sichtseite 27 ab. Da sich die Ringscheibe 0100 in radialer Richtung nur über einen relativ kleinen Teilbereich der Speichen 24 bzw. der Speichenzwischenräume 28 erstreckt, bleibt der offene und filigrane Gesamteindruck weitgehend erhalten. Dennoch reicht bereits diese relativ geringfügige Abdeckung aus, um die axiale Durchströmung der Speichenzwischenräume wirksam zu reduzieren.

Diese Art der Anbringung der Ringscheibe 0100 hat den weiteren Vorteil, dass bei zusätzlicher Vorsehung eines radialen Ansatzes 0102 eine axiale Abdeckung des Felgenaußenhorns 12 ermöglicht wird. Hierdurch kann neben der angestrebten aerodynamischen Verbesserung gleichzeitig die Funktion eines Anfahrschutzes für das Felgenaußenhorn erreicht werden. Die Befestigungsschrauben 0110 ermöglichen ein einfaches Auswechseln der Ringscheibe 0100 im Falle einer Beschädigung, bspw. in Folge eines Bordsteinkontaktes.

Diese Lösung ist äußerst kostengünstig und eignet sich auch zur Nachrüstung vorhandener Räder.

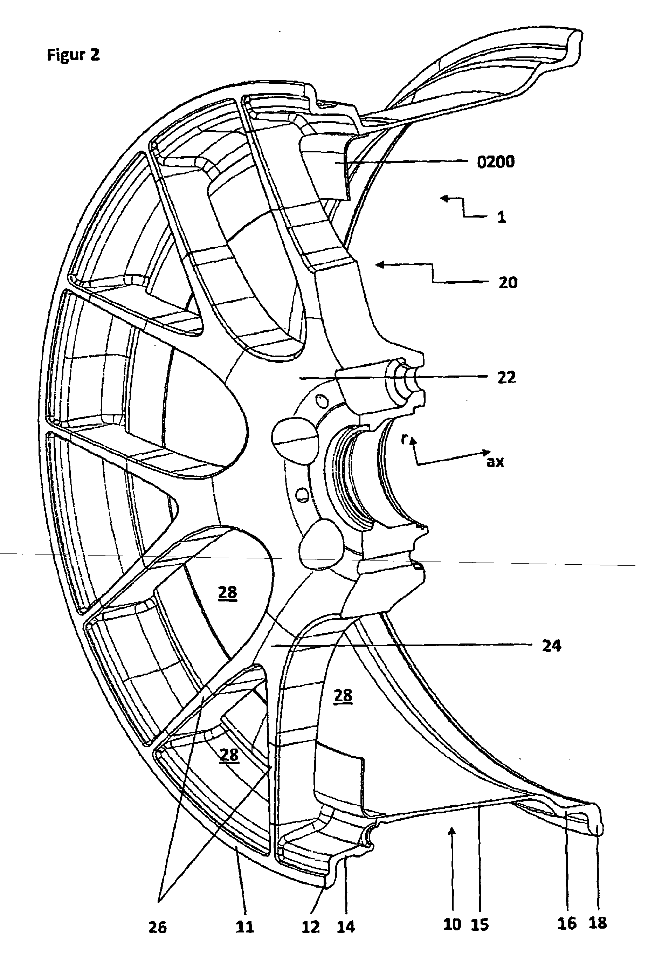

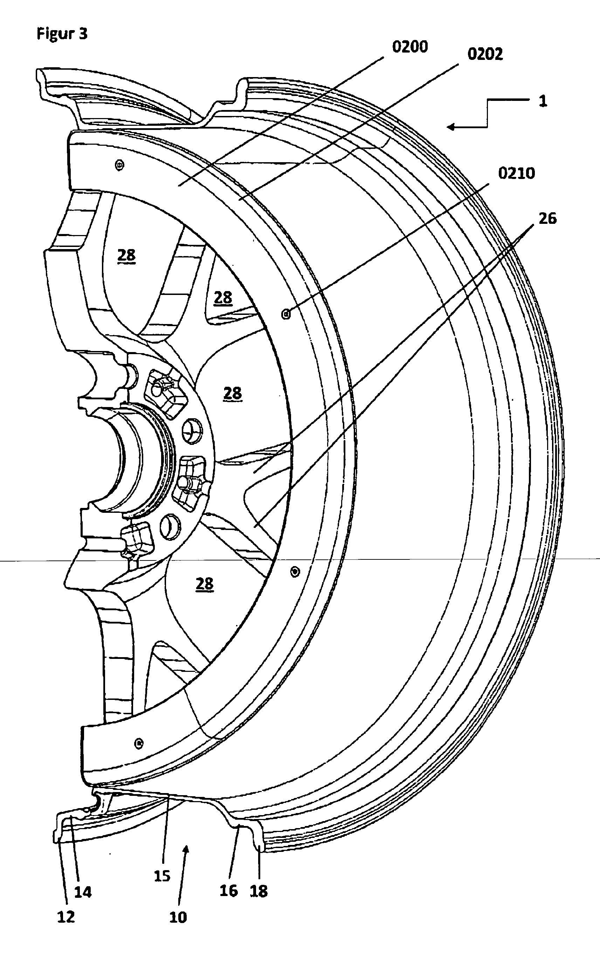

Fig. 2 und Fig. 3 zeigen eine Ausführungsvariante, bei der eine Ringscheibe 0200 axial innen an den Speichenstegen 26 anliegend befestigt ist. Auch in diesem Falle erfolgt die Anbindung mittels Befestigungsschrauben 0210. Weiterhin ist die Ringscheibe 0200 mit einem Profilansatz 0202 versehen, der sich flanschartig im Bereich des Felgenaußenbettes 14 an die Radfelge 10 anlegt.

Durch die axial innenliegende Anbringung der Ringscheibe 0200 ist diese von außen kaum sichtbar, beeinträchtigt somit den optischen Gesamteindruck nur unwesentlich.

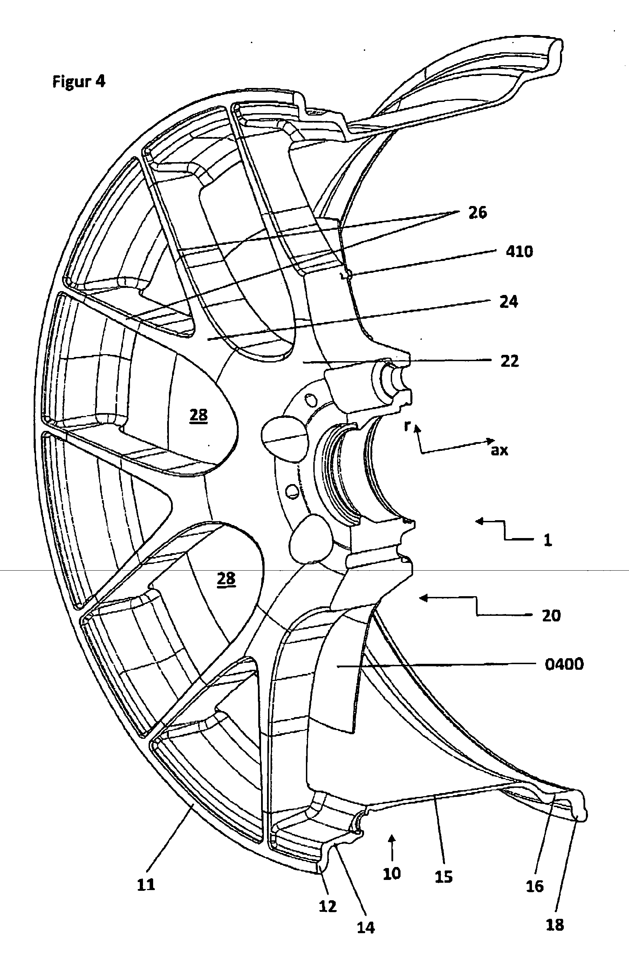

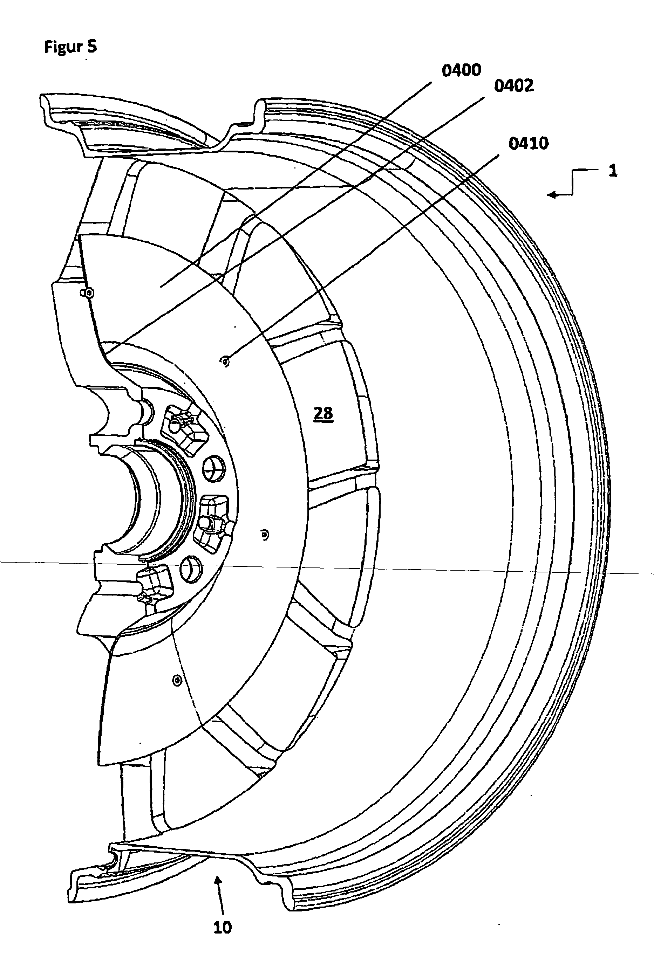

Die Ausführungsvariante gemäß den Fig. 4 und 5 zeigt alternativ die Anbringung einer Ringscheibe 0400 am Nabenbereich 22. Auch hier wurde eine lösbare Verbindung durch Befestigungsschrauben 0410 realisiert. Auch ist ein Profilansatz 0402 vorhanden, mit dem die Ringscheibe 0400 flanschartig innen am Nabenbereich 22 anliegt.

Im Gegensatz zu den vorstehend beschriebenen Ausführungsvarianten deckt die Ringscheibe 0400 einen radial innenliegenden Bereich der Speichenzwischenraume 28 ab. Um ein vergleichbares Maß der Reduzierung der Durchströmung der Speichenzwischenräume 28 zu erzielen, ist die Ringscheibe 0400 radial weit nach außen zu führen.

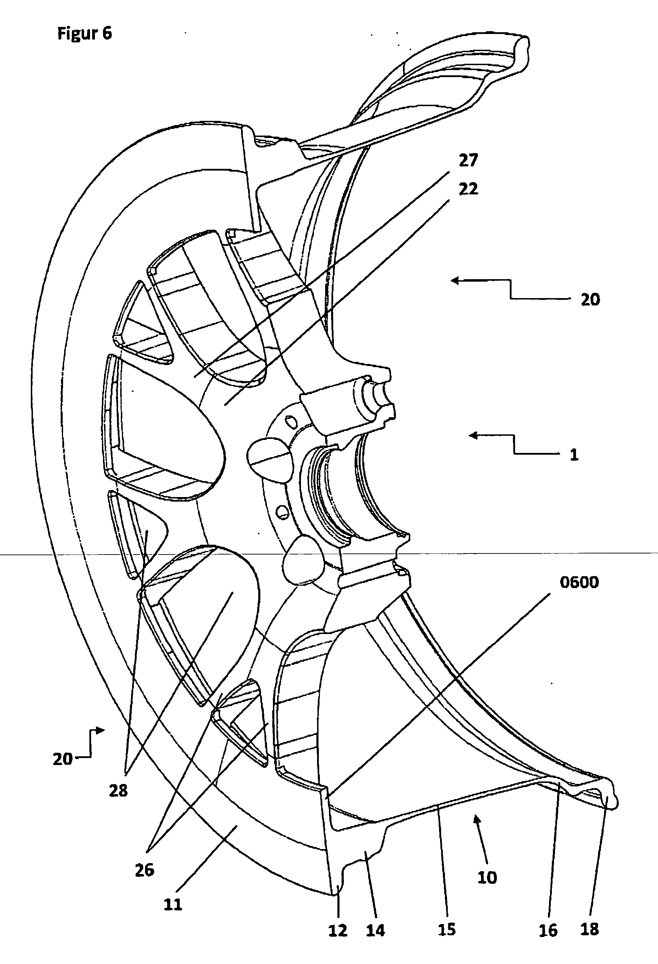

Die in den Fig. 6 bis 15 dargestellten Ausführungsvarianten zeigen die Ausführung von Anströmelementen in Form von Ringstegen 0600...1500, die integral am Rad 1 angeformt sind. Wiederum können Dimensionierung und konkrete Position in weiten Grenzen variiert werden, um den gewünschten Erfolg zu erzielen.

Fig. 6 zeigt einen Ringsteg 0600, der axial außenbündig mit den Speichenstegen 26 ausgeführt ist. Zusätzlich geht der Ringsteg 0600 axial außenbündig in die Sichtseite 11 des Felgenaußenhorns 12 über. Hierdurch ergibt sich ein ästhetisch ansprechendes ebenes Design.

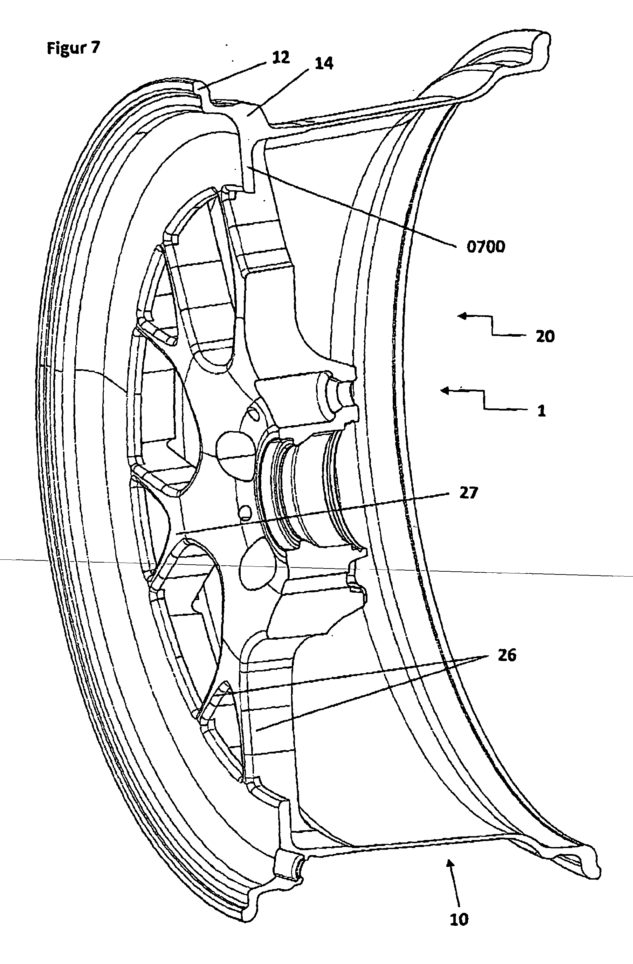

Bei der Ausführungsvariante gemäß Fig. 7 sind die Speichenstege 26 in axialer Richtung weiter innenliegend im Bereich des Felgenaußenbettes 14 angeordnet. In Verbindung mit der ebenfalls axial außenbündigen Ausprägung des Ringstegs 0700 in Bezug auf die Sichtseite 27 der Speichenstege 26 ergibt sich ein flanschartiger Übergang zum Felgenaußenhorn 12.

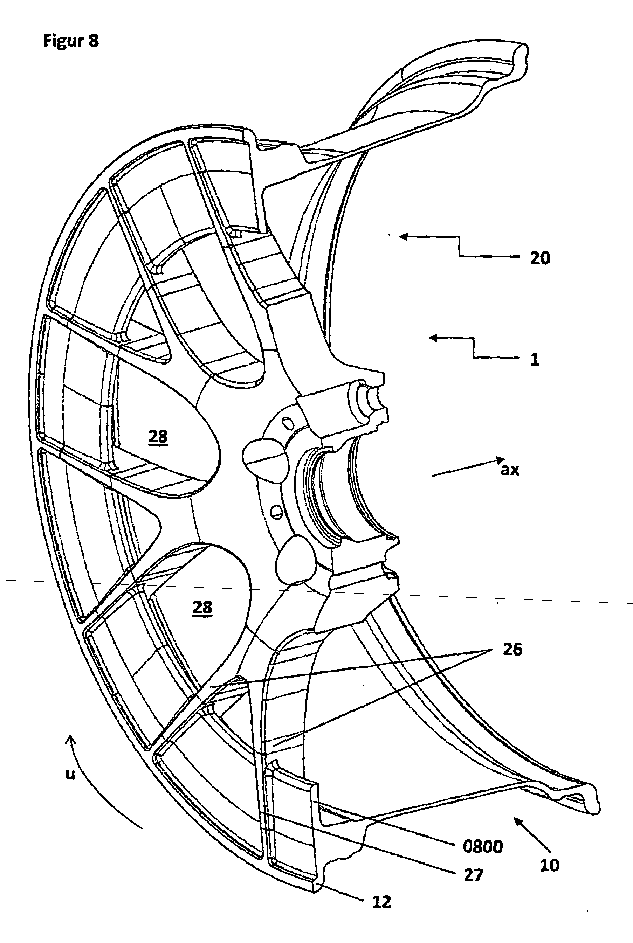

Den Ausführungsformen gemäß den Fig. 8 bis Fig. 15 ist gemeinsam, dass der jeweilige Ringsteg in Bezug auf die Sichtseite 27 der Speichenstege 26 axial einwärts versetzt angeordnet ist, sodass diese in Umfangsrichtung u zwischen den Speichenstegen 26 verlaufend angeordnet sind. Diese Art der Anordnung hat den Vorteil, dass die Sichtseiten 27 der Speichenstege 26 bis zum Felgenaußenhorn 12 hin geführt werden können, somit die optische Beeinträchtigung minimiert wird.

Fig. 8 zeigt einen Ringsteg 0800, der nur um ein verhältnismäßig geringes Maß in axialer Richtung ax gegenüber der Sichtseite 27 der Speichenstege 26 zurückversetzt angeordnet ist.
Er befindet sich damit in etwa unterhalb des Felgenaußenhorns 12.

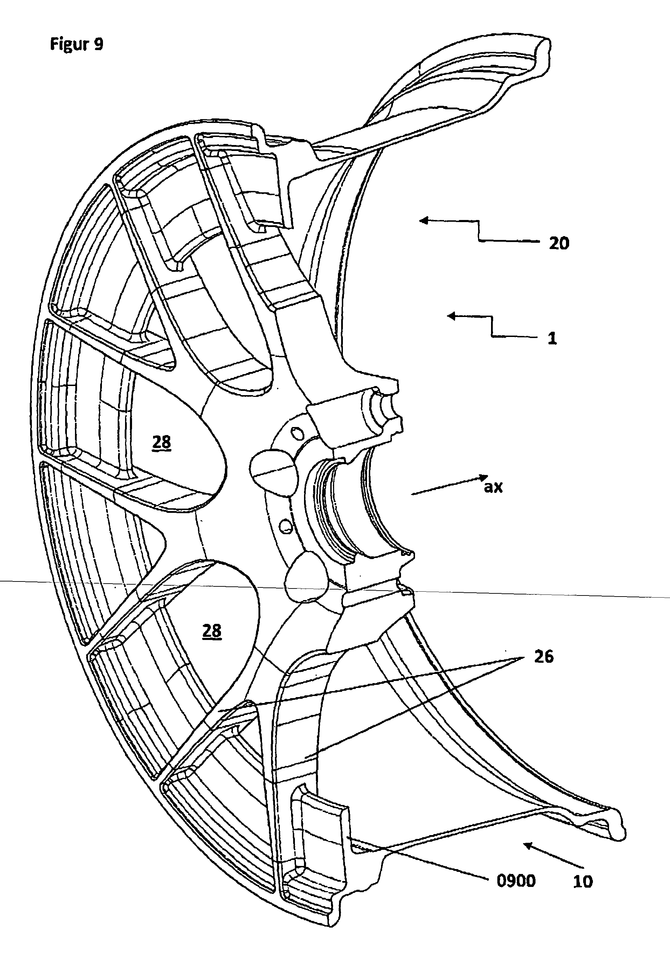

Fig. 9 zeigt einen Ringsteg 0900, der in axialer Richtung weiter zurückversetzt ist und etwa in der (axialen) Mitte der Speichenstege 26 liegt.

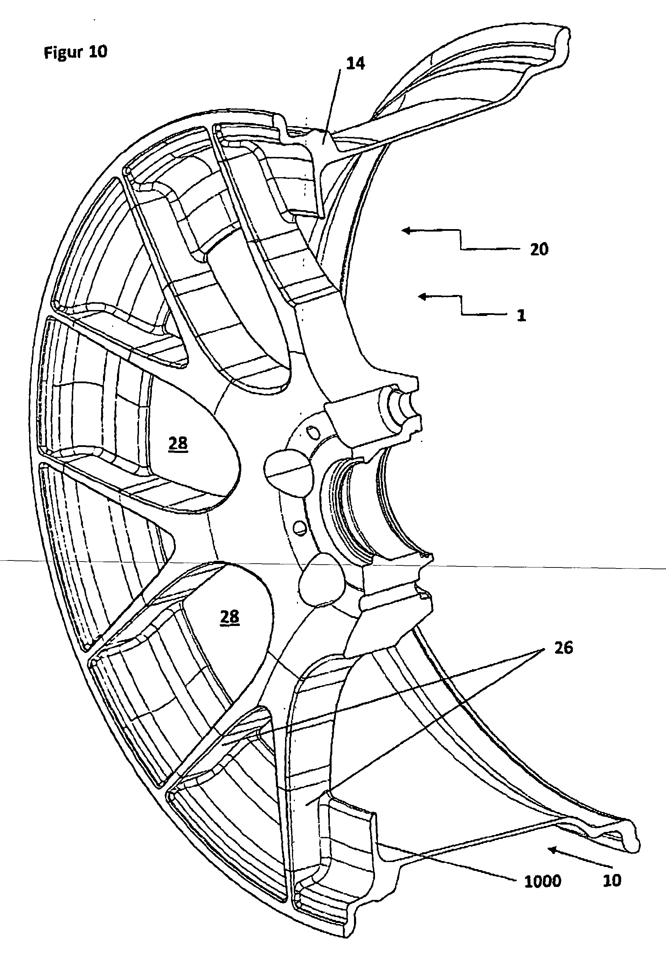

Fig. 10 zeigt eine Variante, bei der ein Ringsteg 1000 axial soweit einwärts zurückversetzt angeordnet ist, dass er in etwa mit der Rückseite der Speichenstege 26 fluchtet. Er befindet sich damit unterhalb des Felgenaußenbettes 14.

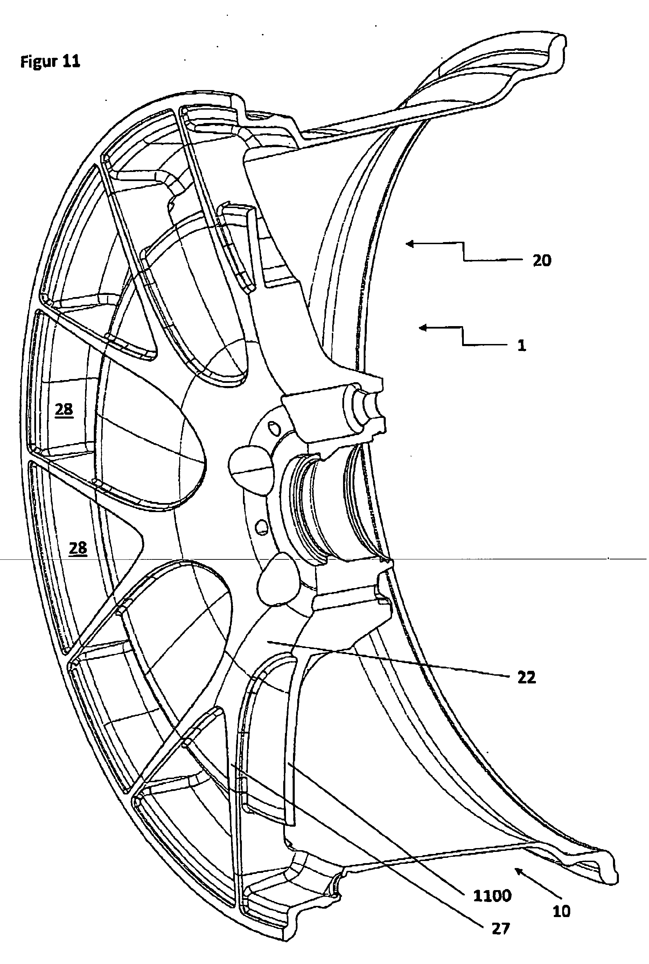

Fig. 11 zeigt einen Ringsteg 1100, der hinsichtlich seiner axialen Position mit dem Ausführungsbeispiel gemäß Fig. 8 korrespondiert, also vergleichsweise geringfügig axial nach innen versetzt angeordnet ist. Der Ringsteg 1100 ist jedoch in diesem Falle ausgehend vom Nabenbereich 22, also radial innen liegend, angeordnet.

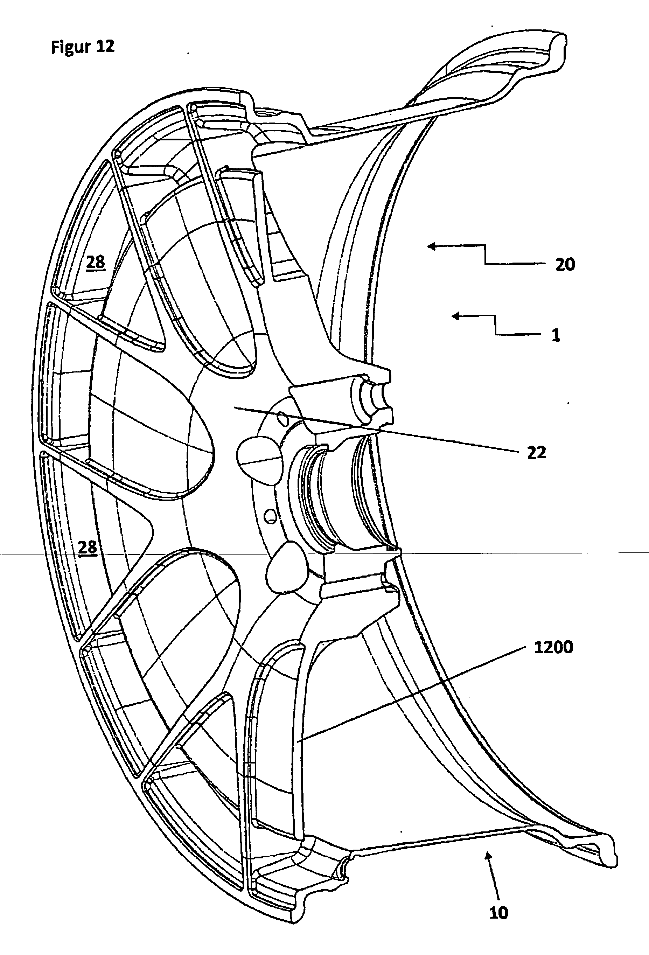

Fig. 12 zeigt eine Variante analog zu Fig. 11, bei der ein Ringsteg 1200 mit größerem Durchmesser gewählt wurde.

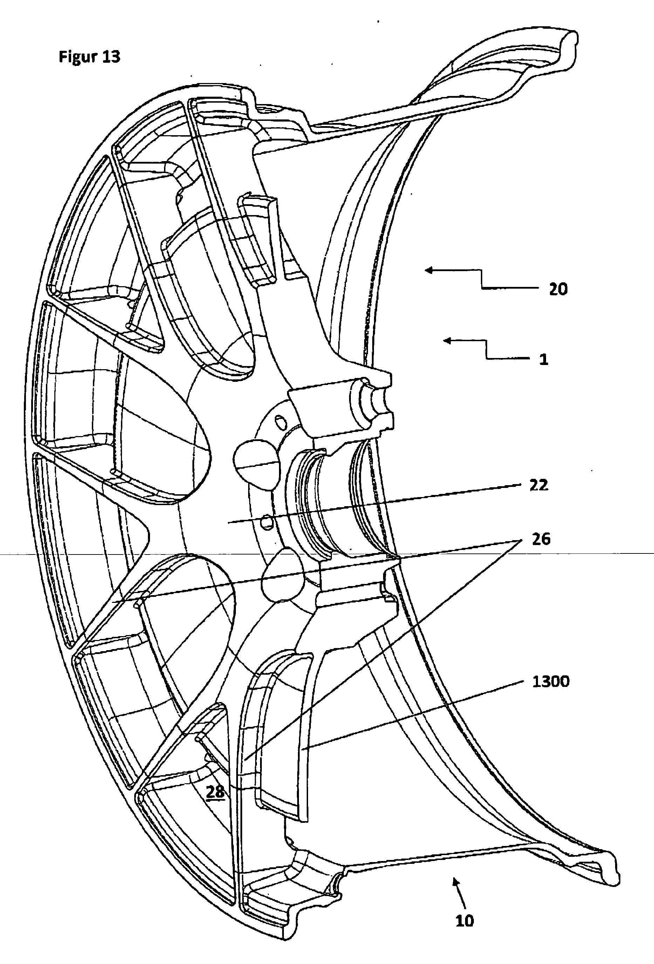

Fig. 13 zeigt einen ebenfalls am Nabenbereich 22 angeformten Ringsteg 1300, der hinsichtlich seiner axialen Position in etwa mittig in Bezug auf die Speichenstege 26 angeformt ist.

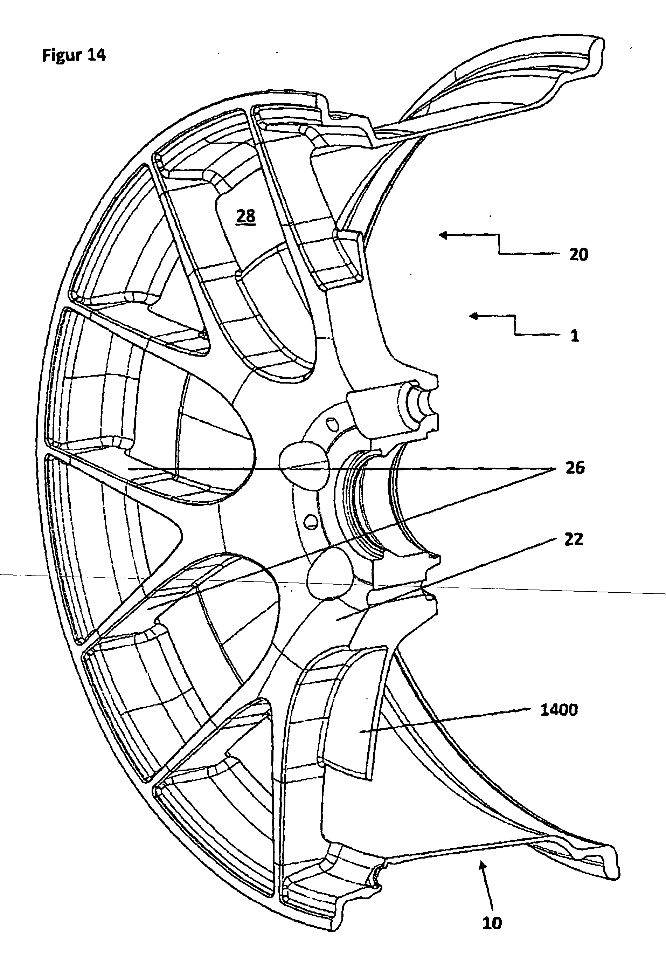

Fig. 14 zeigt einen Ringsteg 1400, der mit der Rückseite der Speichenstege 26 fluchtend ausgebildet ist und ebenfalls vom Nabenbereich 22 ausgeht.

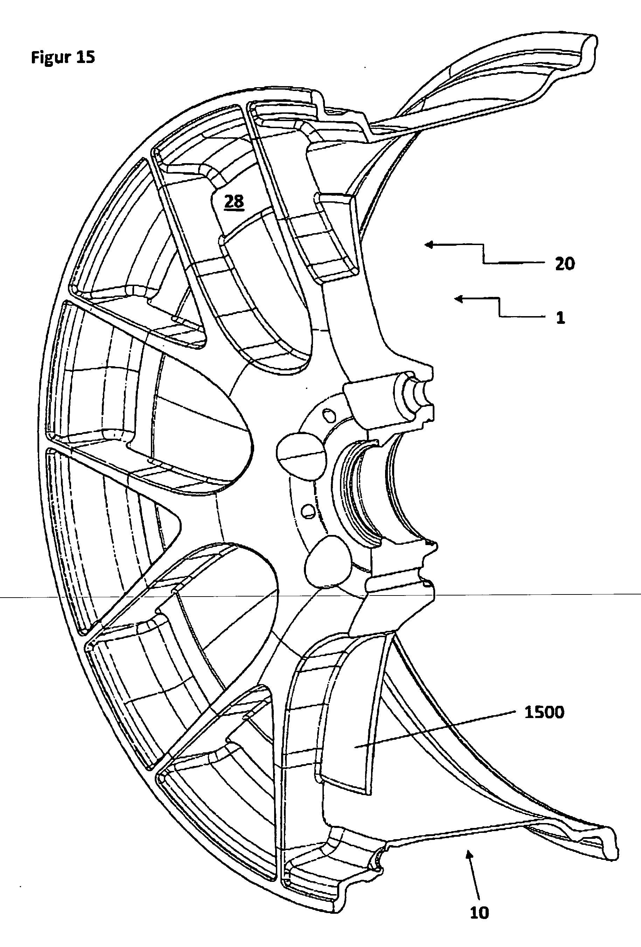

Fig. 15 zeigt einen Ringsteg 1500, der hinsichtlich seiner axialen Position übereinstimmend mit der vorangegangenen Ausführungsvariante angeordnet ist, jedoch einen größeren Durchmesser aufweist.

Bei sämtlichen vorstehend beschriebenen Ausführungsformen erfolgt die zumindest teilweise Blockierung des axialen Strömungsweges durch die Speichenzwischenräume 28 durch Anströmelemente, die entsprechende Abschnitte direkt abdecken, wie dies bei den Ausführungsvarianten mit Ringscheiben gemäß den Fig. 1 bis 5 dargestellt ist, oder aber durch Ringstege, die die Speichenzwischenräume 28 durchsetzen, wie dies in den Ausführungsbeispielen gemäß den Fig. 6 bis 15 gezeigt ist. In diesen Fällen befinden sich somit die Anströmelemente unmittelbar im Kontakt mit den Speichen 24 bzw. Speichenstegen 26.

Weitere Ausführungsvarianten zielen nun darauf ab, dass die Anströmelemente in axialer Richtung noch weiter nach innen zurückversetzt angeordnet sind, also keinen direkten Kontakt mehr mit den Speichen 24 bzw. Speichenstegen 26 aufweisen.

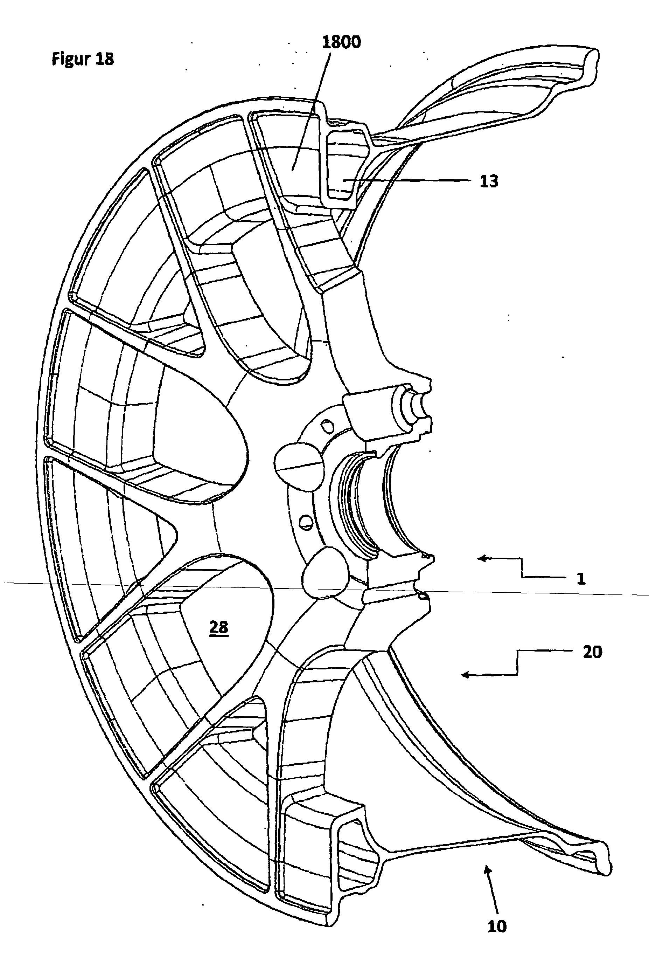

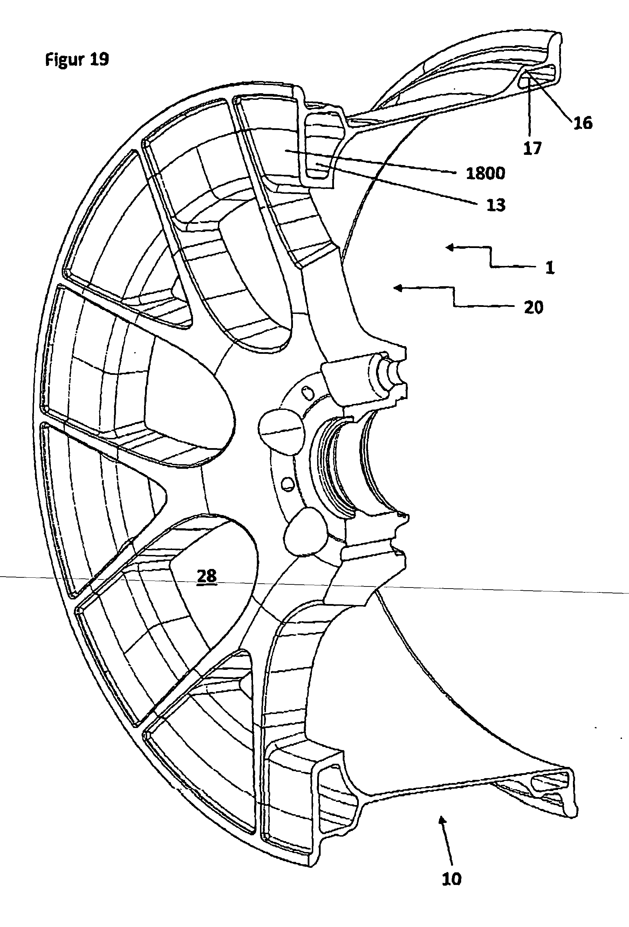

Gemäß einer weiteren Ausführungsform, wie sie in den Fig. 18 und 19 dargestellt ist, ist ein Ringsteg 1800 wiederum direkt im Bereich der Speichenzwischenräume 28 angeformt, ist jedoch zusätzlich integraler Bestandteil eines eine Hohlkammer 13 bildenden Profils. Die Ausführungsvariante gemäß Fig. 19 unterscheidet sich von derjenigen nach Fig. 18 dadurch, dass zusätzlich eine weitere Hohlkammer 17 im Bereich des Felgeninnenbettes 16 vorgesehen ist.

Die vorstehend beschriebenen Ausführungsformen zeigen Umsetzungsmöglichkeiten der erfindungsgemäßen Idee, die axiale Durchströmung der Speichenzwischenräume durch Anströmelemente zu beeinflussen bzw. zu unterbinden, ohne die optische Erscheinungsform von offen gestalteten Rädern stark zu beeinträchtigen. Die angestrebte Verbesserung des Widerstandsbeiwertes des Gesamtfahrzeuges lässt sich bereits durch vergleichsweise geringfügige Reduzierung der Durchtrittsfläche in den Speichenzwischenräumen erreichen, speziell dann, wenn die Anströmelemente radial außenliegend angeordnet sind. So hat es sich gezeigt, dass Anströmelemente, die zumindest 10% in radialer Richtung in die Speichenzwischenräume hineinreichen, zu einer spürbaren Verbesserung des Luftwiderstandsbeiwertes des Kraftfahrzeuges beitragen. Optimale Verbesserungen von ca. 5% des Luftwiderstandsbeiwertes des Gesamtfahrzeuges sind dann erzielbar, wenn die radiale Erstreckung etwa 20-30% beträgt.

Es versteht sich von selbst, dass sich die optische Beeinträchtigung durch die Anordnung der Anströmelemente noch weiter dadurch reduzieren lässt, dass diese auf der Sichtseite farblich kontrastierend zu den übrigen Bereichen des Rades gestaltet werden. Da die Sichtseite der Räder häufig silberfarben lackiert oder auch verchromt ausgeführt werden, können die Anströmelemente bspw. in dunkler Farbgebung, auch mit matter Oberfläche, gestaltet werden.

### Bezugszeichenliste

- 1: Rad

- 10: Radfelge
- 11: Sichtseite
- 12: Felgenaußenhorn
- 13: Hohlkammer
- 14: Felgenaußenbett
- 15: Bereich
- 16: Felgeninnenbett
- 17: Hohlkammer
- 18: Felgeninnenhorn

- 20: Radstern
- 22: Nabenbereich
- 24: Speiche
- 26: Speichensteg
- 27: Sichtseite
- 28: Speichenzwischenraum

- 0100: Ringscheibe
- 0102: radialer Ansatz
- 0110: Befestigungsschraube

- 0200: Ringscheibe
- 0202: Profilansatz
- 0210: Befestigungsschraube

- 0400: Ringscheibe
- 0402: Profilansatz
- 0410: Befestigungsschraube

- 0600: Ringsteg
- 0700: Ringsteg
- 0800: Ringsteg
- 0900: Ringsteg
- 1000: Ringsteg
- 1100: Ringsteg
- 1200: Ringsteg
- 1300: Ringsteg
- 1400: Ringsteg
- 1500: Ringsteg
- 1600: Ringscheibe
- 1700: Ringscheibe
- 1800: Ringsteg

- r: radiale Richtung
- ax: axiale Richtung
- u: Umfangsrichtung

## Patentansprüche

1. Rad (1), insbesondere Leichtmetallrad für Kraftfahrzeuge, bestehend im Wesentlichen aus
- einer Radfelge (10) mit einem Felgeninnenbett (16) und einem Felgenaußenbett (14), die jeweils in ein Felgeninnenhorn (18) und ein Felgenaußenhorn (12) übergehen, und
- einem Radstern (20), mit einer Vielzahl von Speichen (24), die durch Speichenstege (26) gebildet werden, die sich ausgehend von einem Nabenbereich (22) in im Wesentlichen radialer Richtung (r) erstrecken und endseitig direkt oder indirekt an der Radfelge (10) gangebunden sind, wobei jeweils zwischen den Speichenstegen (26) axial durchgehende Speichenzwischenräume (28) gebildet sind, und
- wenigstens einem Anströmelement (0100...1800), das die Speichenzwischenräume (28) scheibenförmig zumindest teilweise abdeckt, durchsetzt oder in axialer Richtung (ax) überdeckt,
**dadurch gekennzeichnet, dass**
- das Anströmelement als Ringscheibe (0100; 0200; 0400; ausgebildet und an der Rädfelge (10) und/oder dem Radstern (20) befestigt ist und die Ringscheibe (0100) axial außen und unmittelbar an den Speichenstegen (26) anliegend angeordnet ist
- oder das Anströmelement als Ringsteg (0600 ; 0700) ausgebildet und unmittelbar am Rad (1) angeformt ist, und der Ringsteg (0600; 0700) axial außenbündig mit den Speichenstegen (26) ausgebildet ist und/oder der Ringsteg (0600) axial außenbündig in der Sichtseite (11) des Felgenaußenhorns (12) übergeht
- oder das Anströmelement (1800) Teil eines im Bereich des Felgenaußenhorns (12) und/oder des Felgenaußenbettes (14) angeordneten, eine Hohlkammer (13)bildenden Profils ist.

2. Rad nach Anspruch 1,
**dadurch gekennzeichnet, dass**
das Anströmelement (0100...1800) wenigstens 10%, bevorzugt 20-30% der radialen Erstreckung der Speichenzwischenräume (28) abdeckt, durchsetzt oder in axialer Richtung (ax) überdeckt.

3. Rad nach einem der Ansprüche 1 oder 2,
**dadurch gekennzeichnet, dass**
das Anströmelement (0100; 0200; 0600...1000) radial außenliegend in Bezug auf die Speichenzwischenräume (28) vorgesehen ist.

4. Rad nach einem der vorangehenden Ansprüche,
**dadurch gekennzeichnet, dass**
die Ringscheibe (0100) einen radialen Ansatz (0102) aufweist, der die Sichtseite (11) des Felgenaußenhorns (12) zumindest teilweise überdeckt.

5. Rad nach einem der vorangehenden Ansprüche,
**dadurch gekennzeichnet, dass**
die Ringscheibe (0100) lösbar, bevorzugt mittels Befestigungsschrauben (0110), befestigt ist..

6. Rad nach einem der Ansprüche 1 bis 3,
**dadurch gekennzeichnet, dass**
der Ringsteg (0800... 1500) in Bezug auf die Sichtseite (27)der Speichenstege (26) axial einwärts versetzt und in Umfangsrichtung (u) zwischen den -Speichenstegen (26) verlaufend angeordnet ist.

## Claims

1. A wheel (1), in particular a light metal wheel for motor vehicles, essentially comprising
- a wheel rim (10) with an inner rim (16) and an outer rim (14) which merge in each case into an inner rim flange (18) and an outer rim flange (12), and
- a wheel centre (20) with a plurality of spokes (24) which are formed by spoke webs (26) which - starting from a hub region (22) - extend in a substantially radial direction (r) and are directly or indirectly attached at the ends to the wheel rim (10), wherein axially continuous spoke interspaces (28) are formed between the spoke webs (26) in each case, and
- at least one inflow element (0100 ... 1800) which covers, passes through or overlaps in the axial direction (ax) the spoke interspaces (28) in the form of a disc at least in part,
**characterized in that**
- the inflow element is designed in the form of an annular disc (0100; 0200; 0400) and is fastened to the wheel rim (10) and/or the wheel star (20), and the annular disc (0100) is arranged axially on the outside and resting directly against the spoke webs (26)
- or the inflow element is designed in the form of an annular web (0600; 0700) and is integrally formed directly on the wheel (1), and the annular web (0600; 0700) is formed axially flush on the outside with the spoke webs (26), and/or the annular web (0600) merges axially flush on the outside into the visible side (11) of the outer rim flange (12),
- or the inflow element (1800) is part of a profile arranged in the region of the outer rim flange (12) and/or of the outer rim (14) and forming a hollow chamber (13).

2. A wheel according to claim 1, **characterized in that** the inflow element (0100 ... 1800) covers, passes through or overlaps in the axial direction (ax) at least 10 %, preferably at least from 20 to 30 %, of the radial extension of the spoke interspaces (28).

3. A wheel according to one of claims 1 or [*sic*] 2, **characterized in that** the inflow element (0100; 0200; 0600 ... 1000) is provided lying radially on the outside with respect to the spoke interspaces (28).

4. A wheel according to any one of the preceding claims, **characterized in that** the annular disc (0100) has an annular attachment (0102) which overlaps the visible side (11) of the outer rim flange (12) at least in part.

5. A wheel according to any one of the preceding claims, **characterized in that** the annular disc (0100) is fastened in a releasable manner, preferably by means of fastening screws (0110).

6. A wheel according to any one of claims 1 to 3, **characterized in that** the annular web (0800 ... 1500) is offset axially inwards with respect to the visible side (27) of the spoke webs (26) and is arranged extending in the peripheral direction (u) between the spoke webs (26).

## Revendications

1. Roue (1) en particulier roue en métal léger pour un véhicule automobile essentiellement constitué par :
- une jante de roue (10) équipée d'un plateau de jante interne (16) et d'un plateau de jante externe (14) se prolongeant respectivement par un rebord de jante interne (18) et par un rebord de jante externe (12), et
- un croisillon de roue (20) équipée de plusieurs rayons (24) formés par des traverses de rayons (26) qui s'étendent à partir d'une zone de moyeu (22) essentiellement en direction radiale (r) et sont directement ou indirectement reliés à la jante (10) à leurs extrémités, des espaces intermédiaires traversants axiaux (28) étant respectivement formés entre les traverses de rayons (26), et
- au moins un élément d'écoulement (0100...1800) en forme de disque qui obture au moins partiellement les espaces intermédiaires entre les rayons (28), les traverse ou les recouvre en direction axiale (ax),
**caractérisée en ce que**
- l'élément d'écoulement est réalisé sous la forme d'un disque annulaire (0100, 0200, 0400) et est fixé sur la jante de roue (10) et/ou sur le croisillon de roue (20) et le disque annulaire (0100) s'applique axialement par l'extérieur et directement sur les traverses de rayons (26), ou
- l'élément d'écoulement est réalisé sous la forme d'une traverse annulaire (0600, 0700) et est directement formé sur la roue (1), et cette traverse annulaire (0600, 0700) est solidaire des traverses de rayons (26) en étant réalisée axialement à l'extérieur de celle-ci et/ou cette traverse annulaire (0600) se prolonge axialement la face visible (11) du rebord externe (12) de la jante en étant axialement solidaire de celui-ci à sa partie externe, ou
- l'élément d'écoulement (1800) est une partie d'un profilé formant une chambre creuse (13) montée dans la zone du rebord externe (12) de la jante et/ou du plateau externe (14) de la jante.

2. Roue conforme à la revendication 1,
**caractérisée en ce que**
l'élément d'écoulement (0100...1800) obture, traverse ou recouvre en direction axiale (ax) au moins 10 %, de préférence 20-30 % de l'étendue radiale des espaces intermédiaires entre les rayons.

3. Roue conforme à l'une des revendications 1 ou 2,
**caractérisée en ce que**
l'élément d'écoulement (0100, 0200, 0600...1000) s'applique radialement à l'extérieur des espaces intermédiaires (28) entre les rayons.

4. Roue conforme à l'une des revendications précédentes,
**caractérisée en ce que**
le disque annulaire (0100) comporte un talon radial (0102) qui recouvre au moins partiellement la face visible (11) du rebord externe (12) de la jante.

5. Roue conforme à l'une des revendications précédentes,
**caractérisée en ce que**
le disque annulaire (0100) est fixé de manière amovible de préférence au moyen de vis de fixation (0110).

6. Roue conforme à l'une des revendications 1 à 3,
**caractérisée en ce que**
la traverse annulaire (0800...1500) est décalée axialement vers l'avant par rapport à la face visible (27) de la traverse de rayon (26) et est montée entre les traverses de rayons (26) dans la direction périphérique (u).
